# EUROPÄISCHE PATENTANMELDUNG

(11) **EP 1 657 127 A1**
(43) Veröffentlichungstag der Anmeldung: **17.05.2006**
(21) Anmeldenummer: 05024224.7
(22) Anmeldetag: 07.11.2005
(51) Int. Cl.: B60R 21/276

(54) **Gassackmodul**

(30) Priorität: 10.11.2004 DE 202004017429 U
(71) Anmelder: TRW Automotive Safety Systems GmbH & Co. KG, 63743 Aschaffenburg (DE)
(72) Erfinder: Frisch, Ralph, 63776 Mömbris (DE); Kienzner, Andreas, 63831 Wiesen (DE); Schneider, Michael, Dr., 63834 Sulzbach (DE)
(74) Vertreter: Kitzhofer, Thomas

(57) **Zusammenfassung**

Ein Gassackmodul für eine Fahrzeuginsassen-Rückhaltevorrichtung umfaßt einen Gasgenerator (14) zum Befüllen eines Gassacks (16), wenigstens eine in einem festen Bauteil des Gassackmoduls (10) gebildete Abströmöffnung (22), durch die das vom Gasgenerator (14) erzeugte und in den Gassack (16) geleitete Gas abströmen kann, und wenigstens eine Ventilklappe (24), die in einer Schließstellung die Abströmöffnung (22) verschließt und in einer Öffnungsstellung die Abströmöffnung (22) freigibt. Weiterhin ist wenigstens ein temperatursensitives Blockierelement vorgesehen, das in Abhängigkeit von der Temperatur die Ventilklappe (24) in der Schließstellung blockieren kann.

## Beschreibung

Die Erfindung betrifft ein Gassackmodul für eine Fahrzeuginsassen-Rückhaltevorrichtung mit einem Gasgenerator zum Befüllen eines Gassacks, wenigstens einer in einem festen Bauteil des Gassackmoduls gebildeten Abströmöffnung, durch die das vom Gasgenerator erzeugte und in den Gassack geleitete Gas abströmen kann, und wenigstens einer Ventilklappe, die in einer Schließstellung die Abströmöffnung verschließt und in einer Öffnungsstellung die Abströmöffnung freigibt.

Für gewöhnlich soll bei einem Gassackmodul der Gassack mit dem vom Gasgenerator erzeugten Gas möglichst schnell befüllt werden. In bestimmten Fällen ist es allerdings wünschenswert, den Gassack nicht mit dem gesamten verfügbaren Gasvolumen zu befüllen, oder, allgemeiner, Gas ausströmen zu lassen, weshalb im Gassackmodul Abströmöffnungen vorgesehen sind, durch deren Freigabe der Druck im Gassack begrenzt werden kann.

Aus der US 2004/0051285 A1 ist ein Gassackmodul der eingangs genannten Art bekannt, bei dem die Ventilklappen, die zwei in einem Gasgeneratorträger gebildete Abströmöffnungen verschließen bzw. freigeben können, mittels Fangbändern mit einem dem Fahrzeuginsassen zugewandten Teil des Gassackgewebes verbunden sind. In einem Auslösefall befinden sich die Ventilklappen zunächst in der nach außen gerichteten Öffnungsstellung. Der Gassack wird also nicht mit dem gesamten zur Verfügung stehenden Gasvolumen befüllt. Tritt der sich entfaltende Gassack nun in Kontakt mit dem Fahrzeuginsassen, bevor sich der Gassack soweit entfaltet hat, daß die Fangbänder gestrafft sind, so bleiben die Abströmöffnungen offen. Dadurch wird der Druck des sich entfaltenden Gassacks und damit die auf den Fahrzeuginsassen ausgeübte Kraft reduziert. Befindet sich der Fahrzeuginsasse in einer Position, die weiter vom Gassackmodul entfernt ist, so entfaltet sich der Gassack ebenfalls, wie oben beschrieben, zunächst langsam bei geöffneten Abströmöffnungen. Sobald sich jedoch der Gassack soweit entfaltet hat, daß die Fangbänder gestrafft werden, ziehen diese die Ventilklappen nach innen, wodurch die Abströmöffnungen gegen den Innendruck des Gassacks verschlossen werden. Es strömt also kein oder nur noch wenig Gas durch die Abströmöffnungen ab, und das gesamte Gasvolumen wird zum Befüllen des Gassacks genutzt.

Weiterhin ist angedacht, das soeben beschriebene Gassackmodul derart auszubilden, daß die Ventilklappen im nicht ausgelösten Zustand des Gassacks zunächst geschlossen sind und sich erst im Auslösefall aufgrund des zunehmenden Drucks im Gassackinneren öffnen.

Nachteilig bei der bisher beschriebenen Lösung ist, daß grundsätzlich in der Anfangsphase der Gassackentfaltung ein Teil des vom Gasgenerator erzeugten Gases durch die Abströmöffnungen entweicht. Dies ist jedoch bei sehr tiefen Temperaturen unterhalb -10 °C nicht erwünscht, weil in diesem Falle das gesamte vom Gasgenerator zur Verfügung gestellte Gas zur Entfaltung des Gassacks benötigt wird.

Die US 5 695 214 schlägt ein Gassackmodul vor, bei dem mehrere in einem Gehäuse des Moduls angeordnete Abströmöffnungen dadurch freigegeben werden, daß ein klappenartiges Verschlußelement aus einer geschlossenen in eine geöffnete Stellung gebracht wird. Dabei ist das Verschlußelement in der geschlossenen Stellung mittels eines Sprengbolzens mit dem Modulgehäuse fest verbunden. Es sind mehrere Sensoren vorgesehen, die die Position eines Fahrzeuginsassen, dessen Größe, die Schwere des Zusammenstoßes sowie die Umgebungstemperatur bestimmen. Der Sprengbolzen wird in einem Auslösefall des Gassacks in Abhängigkeit von diesen Parametern aktiviert, um die Abströmöffnungen freizugeben. Ein solches System mit einer elektronischen Sensoreinrichtung ist jedoch vergleichsweise aufwendig und damit teuer.

Die Aufgabe der vorliegenden Erfmdung besteht somit darin, das aus der US 2004/0051285 A1 bekannte Gassackmodul auf einfache und damit kostengünstige Weise dahingehend weiterzubilden, daß im Auslösefall wahlweise, abhängig von der Umgebungstemperatur, das gesamte vom Gasgenerator erzeugte Gas zur Entfaltung des Gassacks verwendet werden kann.

Erfindungsgemäß ist dazu bei einem Gassackmodul der eingangs genannten Art wenigstens ein temperatursensitives Blockierelement vorgesehen, das in Abhängigkeit von der Temperatur die Ventilklappe in der Schließstellung blockieren kann. Dadurch wird einfach und sicher gewährleistet, daß kein oder nur sehr wenig Gas durch die Abströmöffnung entweicht, wenn das Blockierelement aktiviert ist. So läßt sich das gesamte vom Gasgenerator zur Verfügung gestellte Gasvolumen zur Entfaltung des Gassacks nutzen. Andererseits ist im Falle, daß das Blockierelement nicht wirksam ist, durch die sich aufgrund des Gassack-Innendrucks abrupt öffnende und gegebenenfalls (bei einer Ausbildung mit Fangbändern) rasch schließende Ventilklappe ein schnell wirkender Entlüftungsmechanismus realisiert. Dieser weist, im Gegensatz etwa zu einer Blende als Ventilelement, keine trägen Teile auf.

Da bei tiefen Temperaturen unterhalb -10 °C das vom Gasgenerator erzeugte Gas einen deutlich geringeren Druck aufweist als bei höheren Temperaturen, ist das Blockierelement vorzugsweise so ausgebildet, daß es die Ventilklappe bei tiefen Temperaturen in der Schließstellung blockiert und sie bei höheren Temperaturen freigibt. Auf diese Weise wird auch bei tiefen Temperaturen ein rasches Entfalten des Gassacks erreicht.

Gemäß einer bevorzugten Ausführungsform ist das Blockierelement Teil einer mechanischen Blockiervorrichtung, die ohne separate Energiequelle arbeitet und daher besonders kostengünstig herstellbar und kaum störungsanfällig ist. Das Blockierelement stellt, allgemein gesagt, eine Art Antrieb für eine Blockiervorrichtung dar. Dabei stellen die rein temperaturabhängig funktionierende Blockiervorrichtung und der durch die Klappe (und gegebenenfalls vorhandene Fangbänder) gebildete Öffnungsmechanismus, der auf den Innendruck im Gassackmodul anspricht, zwei prinzipiell unabhängige Systeme dar, wobei jedoch die Blockiervorrichtung ein Wirksamwerden des Öffnungsmechanismus verhindern kann.

Das Blockierelement ist vorteilhaft im Bereich der Abströmöffnung am festen Bauteil des Gassackmoduls angeordnet, wodurch sich eine stabile Ausgestaltung ergibt. Natürlich könnte das Blockierelement auch Bestandteil der Klappe sein.

Das Blockierelement kann durch sein temperaturabhängiges Spannungs-Dehnungsverhalten einen Antrieb zum Blockieren und/oder Freigeben der Ventilklappe darstellen. Die Funktionsweise des Blockierelements beruht also ausschließlich auf einer Materialeigenschaft und ist daher besonders zuverlässig und störungsarm.

Gemäß einer weiteren Ausführungsform stellt das Blockierelement durch seine Wärmeausdehnung einen Antrieb zum Blockieren und/oder Freigeben der Ventilklappe dar. Wiederum wird eine reine Materialeigenschaft genutzt, um einen zuverlässigen Blockiermechanismus zu schaffen.

Vorteilhaft umfaßt das Blockierelement einen Schnapphaken, der einen an der Ventilklappe angebrachten Vorsprung umgreift. Bei tiefen Temperaturen verhindert der Schnapphaken durch seine Steifigkeit ein Öffnen der Ventilklappe. Bei höheren Temperaturen ist das Material des Schnapphakens "weicher", es ist also eine geringere Kraft zum Öffnen der Ventilklappe nötig, die durch den Gassack-Innendruck aufgebracht werden kann. Auf diese Weise erhält man eine einfache, kostengünstige und dennoch sehr effektive Blockiervorrichtung. Der Vorsprung könnte auch umgekehrt den Schnapphaken umgreifen.

Das Blockierelement kann einen Steg umfassen, der die Ventilklappe mit dem festen Bauteil des Gassackmoduls verbindet. Der Steg besteht dabei aus einem Material, das bei tiefen Temperaturen fester ist als bei erhöhten Temperaturen. Dadurch wird die Ventilklappe bei tiefen Temperaturen in ihrer Schließstellung gehalten. Bei höheren Temperaturen kann der Steg aufgrund der Kraft, die durch den Gassack-Innendruck auf die Ventilklappe ausgeübt wird, brechen, und die Ventilklappe öffnet sich. Wieder ergibt sich ein einfacher und wirkungsvoller Blockiermechanismus.

Gemäß einer weiteren Ausführungsform weist das Blockierelement ein federnd vorgespanntes, verschiebliches Verriegelungsteil auf, das in einer am festen Bauteil des Gassackmoduls angebrachten Führung angeordnet ist. Das Verriegelungsteil besteht vorzugsweise aus einem Material mit einem geringeren Wärmeausdehnungskoeffizienten als die Führung. Das Verriegelungsteil und die Führung sind vorteilhaft so aufeinander abgestimmt, daß das Verriegelungsteil bei tiefen Temperaturen in der Führung geklemmt ist, wodurch die Ventilklappe in der Schließstellung blockiert wird. Bei höheren Temperaturen läßt sich das Verriegelungsteil durch die auf die Ventilklappe ausgeübte Kraft in der Führung verschieben, so daß bei genügend hohem Gassack-Innendruck ein Öffnen der Ventilklappe möglich ist. Auch diese Ausführungsform der Blockiervorrichtung stellt also ein einfaches und störungsunanfälliges mechanisches System dar.

Gemäß einer weiteren Ausführungsform umfaßt das Blockierelement eine Bimetallfeder. Diese ist so ausgebildet, daß sie bei tiefen Temperaturen ein Öffnen der Ventilklappe verhindert, und zeichnet sich durch ihre Einfachheit und Wirksamkeit aus.

Weitere Merkmale und Vorteile der Erfindung ergeben sich aus der nachfolgenden Beschreibung mehrerer bevorzugter Ausführungsformen anhand der beigefügten Zeichnung. In dieser zeigen:
- Figur 1 einen Halbschnitt eines Fahrzeuglenkrads mit einem erfindungsgemäßen Gassackmodul gemäß einer ersten Ausführungsform;
- Figur 2 eine Unteransicht eines Generatorträgers eines Gassackmoduls gemäß der ersten Ausführungsform der Erfindung;
- Figur 3 eine Unteransicht eines Generatorträgers eines Gassackmoduls gemäß einer zweiten Ausführungsform der Erfindung;
- Figur 4 eine vergrößerte Detailschnittansicht einer dritten Ausführungsform eines erfindungsgemäßen Gassackmoduls; und
- Figur 5 eine vergrößerte Detailschnittansicht eines Gassackmoduls gemäß einer vierten Ausführungsform der Erfmdung.

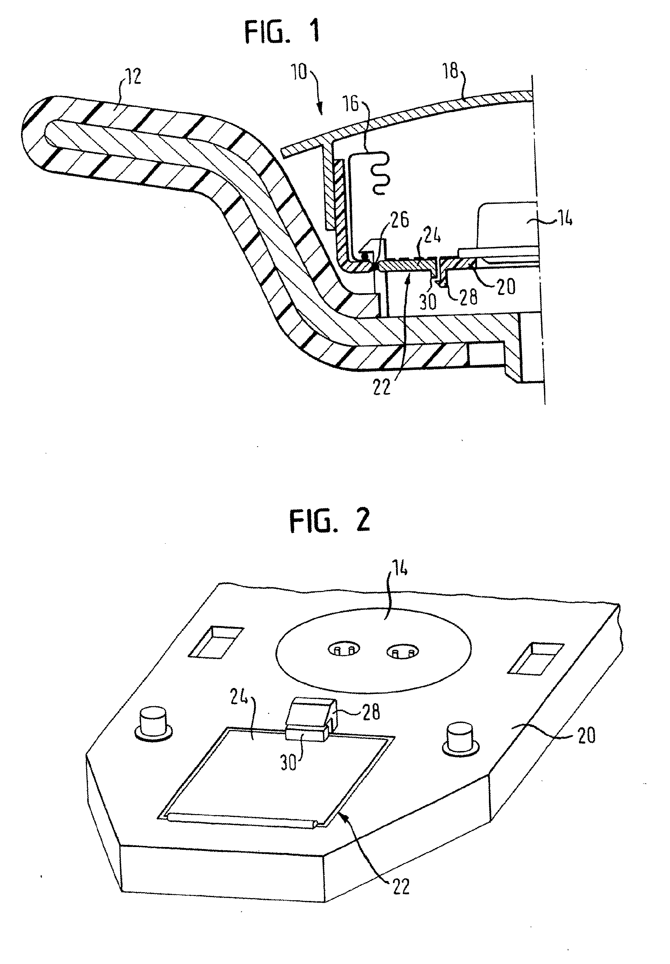

Figur 1 zeigt ein Gassackmodul 10, daß insbesondere für einen Einsatz als Fahrergassackmodul vorgesehen, jedoch nicht darauf beschränkt ist. Bei einem Einsatz als Fahrergassackmodul bildet das Modul 10 vorzugsweise einen Teil des Lenkrads 12. Das Gassackmodul 10 weist einen Gasgenerator 14 und einen in der Figur nur angedeuteten Gassack 16 auf und wird im nicht ausgelösten Zustand durch eine zum Fahrzeuginsassen gerichtete Abdeckkappe 18 begrenzt. In einem festen Bauteil des Gassackmodul 10 in Form eines Generatorträgers 20 ist eine Abströmöffnung 22 vorgesehen, die mittels einer Ventilklappe 24 verschlossen ist. Die Abströmöffnung 22 und die Ventilklappe 24 bilden auf diese Weise ein Ventil zur Begrenzung des Gassack-Innendrucks. Die Ventilklappe 24 kann dabei einstückig mit dem Generatorträger 20 ausgebildet oder über ein Scharnier 26 mit diesem verbunden sein. Der Gassack 16 hat im Bereich der Ventilklappe 24 eine Ausströmöffnung, oder der Gassack 16 wird seitlich außerhalb der Ventilklappe 24 am Modul befestigt. Um eine variable Befüllung des Gassacks 16 in Abhängigkeit von der Sitzposition des Fahrzeuginsassen zu ermöglichen, kann die Ventilklappe 24, wie in der US 2004/0051285 A1 beschrieben, über ein Fangband (nicht gezeigt) mit einem dem Insassen zugewandten Wandungsteil des Gassacks 16 verbunden sein.

Wie am besten aus Figur 2 ersichtlich ist, weist der Generatorträger 20 im Bereich der Abströmöffnung 22 einen Schnapphaken 28 auf, der einen an der Ventilklappe 24 angebrachten Vorsprung 30 umgreift. Selbstverständlich kann der Schnapphaken 28 auch an einem anderen starren Bauteil des Gassackmoduls 10, beispielsweise einem Gassackhalteelement oder auch der Ventilklappe 24 selbst, ausgebildet sein.

Der Schnapphaken 28 stellt ein Blockierelement dar, dessen Funktionsweise auf folgendem Wirkprinzip beruht. Das Material des Schnapphakens 28, bei dem es sich vorzugsweise um Kunststoff handelt, wobei jedoch auch andere Materialen denkbar sind, hat bei verschiedenen Temperaturen unterschiedliche Materialeigenschaften. So ist insbesondere das Spannungs-Dehnungsverhalten bei sehr tiefen Temperaturen ein anderes als z.B. bei Raumtemperatur oder höheren Temperaturen. Der Schnapphaken 28 ist so ausgebildet, daß er bei tiefen Temperaturen ein besonders steifes Verhalten zeigt, wodurch in einem Auslösefall des Gassacks 16 ein durch den Gassack-Innendruck bewirktes Öffnen der Ventilklappe 24 verhindert wird. Bei Raumtemperatur bzw. bei höheren positiven Temperaturen ist das Material des Schnapphakens 28 "weicher" als bei negativen Temperaturen, woraus sich eine geringere Kraft ergibt, die zum Öffnen der Ventilklappe 24 nötig ist. Bei höheren Temperaturen wird ein Öffnen der Ventilklappe 24 aufgrund des Gassack-Innendrucks im Fall des Auslösens ermöglicht.

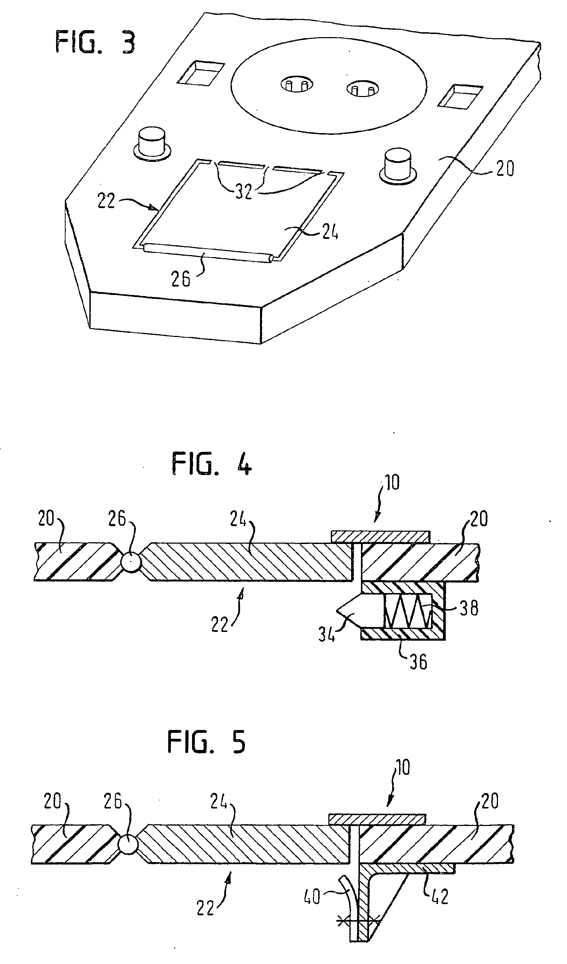

Figur 3 zeigt einen Generatorträger 20 gemäß einer zweiten Ausführungsform des Gassackmoduls 10, wobei gleiche Bauteile gleiche Bezugszeichen tragen und im folgenden nur auf die Unterschiede zwischen den Ausführungsformen eingegangen wird. An Stelle eines Schnapphakens ist bei der Ausgestaltung gemäß Figur 3 vorgesehen, daß die Ventilklappe 24 über mehrere Stege 32 mit dem Generatorträger 20 verbunden ist. Dabei sind sowohl die Ventilklappe 24 als auch der Generatorträger 20 aus Kunststoff hergestellt.

Die Stege 32 bestehen wiederum aus einem Material, das ein temperaturabhängiges Spannungs-Dehnungsverhalten zeigt, und sind derart ausgebildet, daß sie bei tiefen Temperaturen fester sind als bei höheren Temperaturen. Dadurch blockieren die Stege 32 die Ventilklappe 24 bei tiefen Temperaturen in ihrer Schließstellung, während sie bei höheren Temperaturen relativ leicht brechen und sich die Ventilklappe 24 aufgrund des Gassack-Innendrucks öffnen kann.

Die in den Figuren 4 und 5 gezeigten Ausführungsformen beruhen auf einem Wirkprinzip, das sich geringfügig von dem der ersten beiden Ausführungsformen unterscheidet. Während in den bisher beschriebenen Ausführungsformen das temperaturabhängige Spannungs-Dehnungsverhalten des Materials, aus dem die Blockierelemente hergestellt sind, genutzt wurde, beruhen die Blockiervorrichtungen bei den in den Figuren 4 und 5 gezeigten Ausführungsformen des Gassackmoduls 10 auf der Wärmeausdehnung bei Temperaturänderung.

Figur 4 zeigt einen Ausschnitt eines Gassackmoduls 10 in Seitenansicht, bei dem die um das Scharnier 26 bewegliche Ventilklappe 24 mittels eines Blockierelements in Form eines Verriegelungsteils 34 in der geschlossenen Stellung gehalten wird. Das Verriegelungsteil 34 ist in einer am Generatorträger 20 angebrachten Führung 36 angeordnet und mit dieser über eine vorgespannte Feder 38 verbunden.

Das Verriegelungsteil 34 und die Führung 36 bestehen aus verschiedenen Materialien, wobei das Material des Verriegelungsteils 34 einen geringeren Wärmeausdehnungskoeffizienten als das Material der Führung 36 aufweist. Die aus dem Verriegelungsteil 34 und der Führung 36 gebildete Blockiervorrichtung ist derart ausgebildet, daß das Verriegelungsteil 34 bei tiefen Temperaturen in der Führung 36 geklemmt ist. So wird bei diesen Temperaturen ein Öffnen der Ventilklappe 24 verhindert. Bei höheren Temperaturen dehnt sich die Führung 36 aufgrund ihres größeren Wärmeausdehnungskoeffizienten stärker aus als das Verriegelungsteil 34, wodurch die Klemmung aufgehoben wird und das Verriegelungsteil 34 in der Führung 36 gleiten kann. So läßt sich die Ventilklappe 24 im Auslösefall durch den Gassack-Innendruck öffnen.

Bei dem in der Figur 5 gezeigten Gassackmodul 10 kommt als Blockierelement eine Bimetallfeder 40 zum Einsatz, die über ein Befestigungselement 42 im Bereich der Abströmöffnung 22 mit dem Generatorträger 20 verbunden ist. Die Bimetallfeder 40 ist so ausgebildet, daß sie, wie in Figur 5 gezeigt ist, bei tiefen Temperaturen aufgrund ihrer leicht gebogenen Form und ihrer Anordnung unterhalb der Ventilklappe 24 ein Öffnen der Ventilklappe 24 verhindert. Bei höheren Temperaturen verformt sich die Bimetallfeder 40 so, daß sie mit ihrem oberen Ende am vertikalen Teil des Befestigungselements 42 anliegt, wodurch ein Öffnen der Ventilklappe 24 ermöglicht wird.

Bei sämtlichen Ausführungsformen wird die Ventilklappe 24 unter einer vorbestimmten Temperaturgrenze, die unter - 10° C liegt, blockiert.

## Patentansprüche

1. Gassackmodul für eine Fahrzeuginsassen-Rückhaltevorrichtung mit einem Gasgenerator (14) zum Befüllen eines Gassacks (16), wenigstens einer in einem festen Bauteil des Gassackmoduls (10) gebildeten Abströmöffnung (22), durch die das vom Gasgenerator (14) erzeugte und in den Gassack (16) geleitete Gas abströmen kann, und wenigstens einer Ventilklappe (24), die in einer Schließstellung die Abströmöffnung (22) verschließt und in einer Öffnungsstellung die Abströmöffnung (22) freigibt, **dadurch gekennzeichnet, daß** wenigstens ein temperatursensitives Blockierelement vorgesehen ist, das in Abhängigkeit von der Temperatur die Ventilklappe (24) in der Schließstellung blockieren kann.

2. Gassackmodul nach Anspruch 1, **dadurch gekennzeichnet, daß** das Blockierelement so ausgebildet ist, daß es die Ventilklappe (24) bei tiefen Temperaturen in der Schließstellung blockiert und sie bei höheren Temperaturen freigibt.

3. Gassackmodul nach Anspruch 1 oder Anspruch 2, **dadurch gekennzeichnet, daß** das Blockierelement Teil einer mechanischen Blockiervorrichtung ist, die ohne separate Energiequelle arbeitet.

4. Gassackmodul nach einem der Ansprüche 1 bis 3, **dadurch gekennzeichnet, daß** das Blockierelement im Bereich der Abströmöffnung (22) am festen Bauteil des Gassackmoduls (10) angeordnet ist.

5. Gassackmodul nach einem der vorhergehenden Ansprüche, **dadurch gekennzeichnet, daß** das Blockierelement durch sein temperaturabhängiges Spannungs-Dehnungsverhalten einen Antrieb zum Blockieren und/oder Freigeben der Ventilklappe (24) darstellt.

6. Gassackmodul nach einem der Ansprüche 1 bis 4, **dadurch gekennzeichnet, daß** das Blockierelement durch seine Wärmeausdehnung einen Antrieb zum Blockieren und/oder Freigeben der Ventilklappe (24) darstellt.

7. Gassackmodul nach einem der vorhergehenden Ansprüche, **dadurch gekennzeichnet, daß** das Blockierelement einen Schnapphaken (28) umfaßt, der einen an der Ventilklappe (24) angebrachten Vorsprung (30) umgreift.

8. Gassackmodul nach einem der vorhergehenden Ansprüche, **dadurch gekennzeichnet, daß** das Blockierelement einen Steg (32) umfaßt, der die Ventilklappe (24) mit dem festen Bauteil des Gassackmoduls (10) verbindet.

9. Gassackmodul nach einem der vorhergehenden Ansprüche, **dadurch gekennzeichnet, daß** das Blockierelement ein federnd vorgespanntes, verschiebliches Verriegelungsteil (34) aufweist, das in einer am festen Bauteil des Gassackmoduls (10) angebrachten Führung (36) angeordnet ist.

10. Gassackmodul nach Anspruch 9, **dadurch gekennzeichnet, daß** das Verriegelungsteil (34) aus einem Material mit einen geringeren Wärmeausdehnungskoeffizienten als die Führung (36) besteht.

11. Gassackmodul nach Anspruch 9 oder Anspruch 10, **dadurch gekennzeichnet, daß** das Verriegelungsteil (34) und die Führung (36) so aufeinander abgestimmt sind, daß das Verriegelungsteil (34) bei tiefen Temperaturen in der Führung (36) geklemmt ist.

12. Gassackmodul nach einem der vorhergehenden Ansprüche, **dadurch gekennzeichnet, daß** das Blockierelement eine Bimetallfeder (40) umfaßt.

13. Gassackmodul nach einem der vorhergehenden Ansprüche, **dadurch gekennzeichnet, daß** das Blockierelement unterhalb eines vorbestimmten Temperaturgrenzwerts, der unter -10 °C liegt, die Ventilklappe (24) in der Schließstellung blockiert.
